# EUROPEAN PATENT APPLICATION

(11) **EP 4 847 449 A1**
(43) Date of publication of application: **02.12.2026**
(21) Application number: 24920158.3
(22) Date of filing: 09.12.2024
(51) Int. Cl.: C01B 33/107, C01B 33/02

(54) **METHOD FOR PRODUCING CHLOROSILANE COMPOUND**

(30) Priority: 24.01.2024 JP 2024008607
(71) Applicant: TOKUYAMA CORPORATION, Yamaguchi 745-8648 (JP)
(72) Inventor: NAKANISHI, Hodaka, Shunan-shi, Yamaguchi 745-8648 (JP); IIYAMA, Shoji, Shunan-shi, Yamaguchi 745-8648 (JP)
(74) Representative: Schlegel, Sebastian
(86) International application number: PCT/JP2024/043358
(87) International publication number: WO 2025/158801

(57) **Abstract**

In the production of chlorosilanes by a chlorination reaction of metallic silicon, metallic silicon is used that has a zirconium content (Zr%) of not more than 35 ppm by mass on an elemental basis and a mass ratio (Ti%/Zr%) of a titanium content (Ti%) to the zirconium content (Zr%) of not less than 8.0, in order to prevent scale deposition on an inner wall of an upstream part of a heat exchanger provided in a transfer path for transferring a reaction gas to a distillation column, and to enable stable production of chlorosilanes.

## Description

### Technical Field

The present invention relates to a novel method for producing chlorosilanes. More specifically, the present invention provides a method that allows for the stable implementation of production of chlorosilanes through a chlorination reaction of metallic silicon.

### Background Art

Chlorosilanes used for the production of high-purity polysilicon, as typified by the Siemens process, are produced by purifying chlorosilanes obtained from a chlorination reaction of metallic silicon. For example, a commonly used method involves supplying metallic silicon powder and hydrogen chloride to a fluidized bed in a reactor to produce trichlorosilane through a chlorination reaction of the metallic silicon. Also known is a method of producing trichlorosilane through a chlorination reaction of metallic silicon by supplying metallic silicon powder, tetrachlorosilane, and, if necessary, hydrogen to a fluidized bed.

This reaction is represented by the formulas below. It is known that at a reaction temperature of 300°C to 360°C, the reactions of formulas (1) and (2) below occur, and at 500°C to 550°C, the reaction of formula (3) below occurs.

Si + 3HCl → SiHCl₃ + H₂ (1)

Si + 4HCl → SiCl₄ + 2H₂ (2)

Si + 3SiCl4 + 2H₂ → 4SiHCl₃ (3)

As the metallic silicon used as a raw material, silicon powder with a relatively high degree of purification, which is called metallurgical grade, is generally used. Specific methods for producing such metallurgical-grade silicon typically involve using a silicon raw material, typified by silica stone, and a reducing agent such as charcoal, coke, coal, or wood chips. A mixture of these materials is charged into an arc furnace to form a raw material layer and heated to a high temperature of 2000°C to 2500°C to reduce the silica stone (see Non-patent Literature 1).

The metallurgical-grade silicon typically has a purity of approximately 99% by mass on an elemental basis. Specifically, the metallurgical-grade silicon has a silicon content of 98.5% by mass to 99.4% by mass, preferably 99.0% by mass to 99.4% by mass, on an elemental basis and also includes metal impurities such as Fe, Ca, Al, Mn, Ni, Zr, Zn, and/or Ti (Patent Literatures 1 and 2). According to Patent Literature 2, for example, the content of metal impurities is indicated as 2300 ppm by mass to 3600 ppm by mass for iron, 1400 ppm by mass to 1600 ppm by mass for aluminum, less than 10 ppm by mass to 11 ppm by mass for zirconium, and 0.013 ppm by mass to 0.021 ppm by mass for titanium. It is thus known that metallic silicon used for the production of chlorosilanes contains zirconium and titanium, and the metallic silicon that has been known so far has a small content ratio of titanium to zirconium (Patent Literature 2, Tables 1 and 2).

By producing chlorosilanes using such metallurgical-grade silicon, the target chlorosilanes can be obtained with high reactivity. However, when a reaction liquid is distilled in a step of purifying the obtained chlorosilanes, a considerable amount of scale is deposited on inner walls of equipment including a distillation column and subsequent tank, piping and the like, leading to equipment blockages. Analysis has revealed that the scale deposited in and downstream of the distillation column is mainly composed of aluminum chloride, which is generated when the aluminum component among the metal impurities in the metallurgical-grade silicon is chlorinated during the trichlorosilane generation reaction (Patent Literature 3, paragraph [0005]).

As a countermeasure against the deposition of such scale composed of aluminum chloride, the deposited scale is withdrawn from the bottom of the distillation column. In addition, for a reaction gas discharged from the chlorination reactor, it has been proposed to install a sodium chloride-filled tower along a transfer path for transferring the reaction gas to the distillation column, to remove the aluminum chloride by converting the aluminum chloride into a double salt (Patent Literature 4).

### Citation List

### [Patent Literature]

[Patent Literature 1]
   Japanese Patent Application Publication, Tokukai, No. 2012-534930
[Patent Literature 2]
   Published Japanese Translation of PCT International Application, Tokuhyo, No. 2013-535399
[Patent Literature 3]
   Japanese Patent Application Publication, Tokukai, No. 2013-010648
[Patent Literature 4]
   Japanese Patent Application Publication, Tokukai, No. 2009-256197

### [Non-patent Literature]

[Non-patent Literature 1]
Kogyo Kanetsu (Industrial Heating), Vol. 46, No. 3 (2009), pp. 1-11, "Kogata Ark Ro no Genjo to Kadai (Current Status and Issues of Small Arc Furnaces)"

### Summary of Invention

### Technical Problem

The countermeasures against aluminum chloride deposition effectively alleviate the aforementioned problem of scale deposition on the inner walls of the equipment in and downstream of the distillation column. However, from the standpoint of stable industrial operation, the inhibition of scale deposition is still insufficient, and it is particularly unsatisfactory that scale can be locally deposited in the transfer path for transferring the reaction gas to the distillation column.

To elaborate, in the middle of the transfer path for transferring the reaction gas to the distillation column, a cooling heat exchanger for liquefying the reaction gas, which has a high temperature, is typically provided to liquefy the high-temperature reaction gas by cooling it to 10°C to 40°C. At that time, scale is locally deposited on a wall surface of an upstream part within the heat exchanger where the gas flows in. (Hereinafter, the wall surface of the upstream part within the heat exchanger refers to a wall surface of an upper part where the gas flows in.) In particular, in a case where a shell-and-tube heat exchanger, due to its good cooling efficiency etc., is used as the cooling heat exchanger, a large amount of scale is deposited on a mounting perforated plate to which cooling tubes provided within the heat exchanger are connected by their ends on a reaction gas inlet side. This can block smalldiameter openings at the ends of the cooling tubes.

Thus, a major challenge in the production of chlorosilanes by the chlorination reaction of metallic silicon has been to prevent the deposition of scale on an inner wall of the upstream part of the heat exchanger provided in the transfer path for transferring the reaction gas to the distillation column, and to thereby enable the stable production of chlorosilanes.

### Solution to Problem

In view of the above problem, the inventors of the present invention have continued to conduct diligent research on measures to inhibit scale deposition on the inner wall of the upstream part of the heat exchanger provided in the transfer path for transferring the reaction gas. As a result, the inventors discovered that the scale deposited at this location has a unique composition containing zirconium. Based on this knowledge, the inventors found that by using, as the metallic silicon, a material with low contents of zirconium and titanium within specific ranges, the deposition could be significantly prevented. Thus, the inventors completed the present invention.

Specifically, an embodiment of the present invention is a method for producing chlorosilanes by a chlorination reaction of metallic silicon, wherein the metallic silicon used in the chlorination reaction has: a zirconium content (Zr%) of not more than 35 ppm by mass on an elemental basis; and a mass ratio (Ti%/Zr%) of a titanium content (Ti%) to the zirconium content (Zr%) of not less than 8.0.

### Advantageous Effects of Invention

According to an embodiment of the present invention, by using metallic silicon in which the zirconium content is within a specific range and the mass ratio of titanium to zirconium is also within a specific range, the deposition of scale on an inner wall of an upstream part of a heat exchanger can be significantly reduced when a reaction gas of chlorosilanes generated by the chlorination reaction is transferred to a distillation column. As a result, the cooling efficiency of the heat exchanger can be maintained at a high level, so that the stable production of chlorosilanes is enabled. Furthermore, when the heat exchanger is a shell-and-tube heat exchanger, blockage of end openings of cooling tubes that are connected to a mounting perforated plate on a reaction gas inlet side can also be prevented, enabling the stable production of chlorosilanes, which is extremely useful for industrial applications.

### Brief Description of Drawings

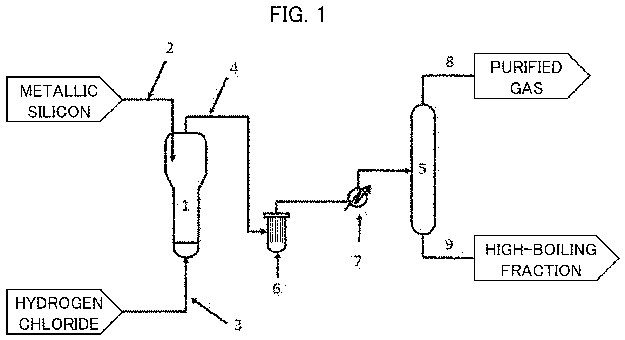

- Fig. 1: is a representative process diagram for producing chlorosilanes by a method in accordance with an embodiment of the present invention.

### Description of Embodiments

In an embodiment of the present invention, any known method for chlorinating metallic silicon can be applied without limitation for the production of chlorosilanes. Such a chlorination reaction is generally carried out using a fluidized-bed reaction device.

For example, a method for producing chlorosilanes can be cited in which the metallic silicon and hydrogen chloride are supplied to a fluidized bed of a fluidized-bed reaction device to carry out a chlorination reaction of the metallic silicon. In an embodiment of the present invention, chlorosilanes include dichlorosilane, trichlorosilane, tetrachlorosilane, and the like, and an embodiment of the present invention is particularly preferably a method for producing trichlorosilane.

As the hydrogen chloride, various industrially available types of hydrogen chloride can be used. The respective supply amounts of metallic silicon and hydrogen chloride are not particularly limited, and known conditions can be adopted without particular limitation, provided that (i) a ratio of the supply amounts is suitable for allowing chlorination, and (ii) the metallic silicon and the hydrogen chloride can be supplied at a velocity that provides a flow rate allowing for the formation of a fluidized bed.

The reaction temperature in the reaction is appropriately determined in consideration of the material and capacity of the reaction device, catalysts, and the like, but is generally set in the range of 200°C to 500°C, preferably 250°C to 450°C.

As another method for producing chlorosilanes, a method can also be cited in which metallic silicon powder, tetrachlorosilane, and hydrogen are supplied to a fluidized bed together with a catalyst, typified by copper silicide, to carry out a chlorination reaction of the metallic silicon.

In the above method, the respective supply amounts of metallic silicon, tetrachlorosilane, and hydrogen are not particularly limited, and known conditions can be adopted without particular limitation, provided that (i) a ratio of the supply amounts is suitable for allowing chlorination, and (ii) the metallic silicon, the tetrachlorosilane, and the hydrogen can be supplied at a velocity that provides a flow rate allowing for the formation of a fluidized bed. The reaction temperature in the reaction is appropriately determined in consideration of the material and capacity of the reaction device, catalysts, and the like, but is generally set in the range of 400°C to 700°C, preferably 450°C to 600°C.

In an embodiment of the present invention, metallic silicon of the aforementioned metallurgical-grade purity is preferably used. Typically, the material used as metallic silicon is obtained by using a silicon raw material, typified by silica stone, and a reducing agent such as charcoal, coke, coal, or wood chips; charging a mixture of these materials into an arc furnace to form a raw material layer; and heating the mixture to a high temperature of 2000°C to 2500°C to reduce the silica stone. By the above reduction, a large lump of metallic silicon with a mass of approximately 1000 kg to 2000 kg is obtained. For the production of chlorosilanes, the large lump of metallic silicon may be crushed into a size suitable for the reaction and used.

As described above, the production of chlorosilanes is usually carried out in a fluidized-bed system. As such, the metallic silicon is required to be of a size that can be fluidized in a fluidized bed. Metallic silicon with an average particle size of 150 µm to 400 µm, particularly 180 µm to 300 µm, is suitable. The measurement of the average particle size of metallic silicon can be carried out according to the method described in the Examples. Setting the average particle size of metallic silicon within the above range is preferable because this allows a stable fluidized bed to be obtained.

In the method for producing chlorosilanes in accordance with an embodiment of the present invention, as the metallic silicon used as a raw material, one with a low zirconium content (Zr%) of not more than 35 ppm by mass, preferably not more than 25 ppm by mass, more preferably not more than 25 ppm by mass on an elemental basis is used. Furthermore, the metallic silicon used is one in which the mass ratio (Ti%/Zr%) of the titanium content (Ti%) to the zirconium content (Zr%) is not less than 8.0, preferably not less than 9.0, and more preferably not less than 9.0. By using, as a reaction raw material, such metallic silicon with a low zirconium content and a specifically high mass ratio of titanium to zirconium, the deposition of scale on the inner wall of the heat exchanger provided in the transfer path to the distillation column can be effectively reduced. In the method for producing chlorosilanes in accordance with an embodiment of the present invention, as the metallic silicon used as a raw material, one with a zirconium content (Zr%) of preferably not less than 1 ppm by mass, more preferably not less than 5 ppm by mass, and still more preferably not less than 15 ppm by mass on an elemental basis is used. Such metallic silicon containing not less than a certain amount of zirconium is easy to obtain as a reaction raw material because production of the metallic silicon requires simpler purification. Furthermore, the metallic silicon used is one in which the mass ratio (Ti%/Zr%) of the titanium content (Ti%) to the zirconium content (Zr%) is preferably not more than 30.0, more preferably not more than 20.0, and still more preferably not more than 15.0. By using the metallic silicon with a low mass ratio as a reaction raw material, the content of titanium impurities in the liquefied reaction gas is reduced.

That is, according to studies conducted by the inventors of the present invention, the composition of the scale that is deposited on the inner wall of the upstream part of the heat exchanger in the transfer path for transferring the reaction gas is different from the conventionally known aluminum chloride contained in the scale deposited on the inner walls of the equipment in and downstream of the distillation column; the aluminum content is trace (typically, not more than 0.3% by mass). On the other hand, the scale deposited on the inner wall of the upstream part of the heat exchanger has a characteristically high zirconium content of 30% by mass to 40% by mass, and thus is analyzed to have a unique composition. For this reason, the amount of deposition of the scale on the inner wall of the upstream part of the heat exchanger can be reduced with a certain effectiveness by using metallic silicon with as low a zirconium content as possible.

However, there is a natural limit to the reduction of the zirconium content in the metallic silicon. In fact, even in a case where commercially available metallic silicon with the lowest level of zirconium content is used as a reaction raw material, the inhibition of scale deposition on the inner wall of the upstream part of the heat exchanger is not fully satisfactory. In such a situation, by using, as the metallic silicon, one that not only has a low zirconium content but, as described above, also has a titanium content greater than the zirconium content within a specific range, an excellent effect of significantly improving the inhibition of scale deposition on the inner wall of the heat exchanger is obtained.

The reason for this is not necessarily clear, but the inventors of the present invention speculate that the following mechanism may be influential. That is, most metal species among metal impurities contained in metallic silicon, including the aforementioned aluminum, zirconium, and titanium, are chlorinated to form chlorides during the generation reaction of chlorosilanes such as trichlorosilane. Among such metal chlorides, the chloride of aluminum (aluminum chloride), which is the main component of the metal impurities, has a melting point of 192°C. This is a considerably high melting point but significantly lower than the high reaction temperature of the chlorination reaction of metallic silicon that generates the chlorosilanes. Therefore, in the upstream part of the heat exchanger in the transfer path to the distillation column, where the high-temperature reaction gas generated by the chlorination reaction flows in, the deposition of aluminum chloride is prevented from becoming significant. The chloride of zirconium (zirconium tetrachloride), on the other hand, has a melting point as high as over 400°C. As such, the chloride of zirconium is considered to be already solidified in the reaction gas that has flowed into the upstream part of the heat exchanger, and to form scale by selectively adhering to the inner wall surface of the upstream part of the heat exchanger when exposed to a temperature drop in an initial cooling stage.

Under the circumstances, in a case where the metallic silicon contains titanium in the above-described specific amount, the chloride of titanium (titanium tetrachloride), due to its low melting point of -25°C and low boiling point of 136.4°C, is considered to liquefy in the upstream part of the heat exchanger which has the function of cooling and liquefying the high-temperature reaction gas to 10°C to 40°C. It is presumed that this liquid titanium chloride has good affinity with the solid zirconium chloride and effectively reduces adhesion of the solid zirconium chloride to the inner wall surface of the equipment, so that the remarkable effect of inhibiting scale deposition on the inner wall of the heat exchanger as described above is exhibited.

In a case where metallic silicon containing titanium in the specific amount is used as a reaction raw material, a reaction liquid that is cooled and condensed in a heat exchanger and transferred to a distillation column 5 shown in Fig. 1 will contain the titanium chloride in accordance with a titanium content in the reaction raw material. However, the titanium chloride can be mostly removed easily by being discharged into a high-boiling fraction through distillation separation in the distillation column 5.

Note here that in a case where the zirconium content (Zr%) of the metallic silicon used as a raw material exceeds 35 ppm by mass, the deposition of scale on the inner wall of the upstream part of the heat exchanger increases significantly. In a case where the zirconium content (Zr%) of the metallic silicon is less than 1 ppm by mass, highly advanced purification is required, which makes it difficult to obtain the metallic silicon.

Further, in a case where the mass ratio (Ti%/Zr%) of the titanium content (Zr%) to the zirconium content (Zr%) of the metallic silicon used is not more than 8.0, the deposition of scale on the inner wall of the upstream part of the heat exchanger also increases significantly. In a case where this value exceeds 30.0, the content of titanium impurities in the liquefied reaction gas is excessively high.

In metallic silicon, when the titanium content thus satisfies the specified mass ratio (Ti%/Zr%) to the zirconium content (Zr%), the titanium content, expressed on an elemental basis by mass, is generally not less than 10 ppm by mass and not more than 600 ppm by mass, more preferably not less than 10 ppm by mass and not more than 400 ppm by mass, and still more preferably not less than 10 ppm by mass and not more than 300 ppm by mass.

Metallurgical-grade silicon, though it is of high purity as described above, still contains various metal impurities, and the specific content of each metal species varies within a certain range depending on the purity of the silicon raw material and the method of purification used for the obtained metallic silicon. The zirconium content and the titanium content specified in an embodiment of the present invention are also within the ranges of variation of the respective metal impurities in such metallurgical-grade silicon, and metallic silicon that satisfies these relationships as specified can be produced by adjustment made by a person skilled in the art through selection of the silicon raw material and the degree of purification applied. In fact, among commercial metallic silicon products, there are some, albeit in a small proportion, that satisfy the specified contents of zirconium and titanium, and such commercial metallic silicon products can be identified by analysis and adopted.

In metallic silicon, aluminum is not a major component of the scale deposited on the inner wall of the upstream part of the heat exchanger, as described above. Reducing the aluminum content does not significantly affect the effects of the present invention. However, a lower aluminum content is more preferable. Furthermore, considering the effective prevention of deposition of scale composed of aluminum chloride in a distillation step and thereafter, it is desirable to use metallic silicon with an aluminum content of preferably not less than 50 ppm by mass and not more than 3000 ppm by mass, more preferably not less than 1400 ppm by mass and not more than 1600 ppm by mass, on an elemental basis.

In an embodiment of the present invention, the content of metal impurities contained in metallic silicon is a value measured by dissolving the metallic silicon in hydrofluoric-nitric acid, filtering the resulting solution, and introducing the filtrate into a high-frequency inductively coupled plasma optical emission spectrometer (ICP-OES).

A representative process diagram for carrying out the method for producing chlorosilanes in accordance with an embodiment of the present invention as described above is shown in Fig. 1. In the production process of Fig. 1, in a reaction step, metallic silicon and hydrogen chloride are supplied to a fluidized bed of a fluidized-bed reaction device to carry out a chlorination reaction of the metallic silicon, to thereby produce trichlorosilane. That is, metallic silicon is supplied from a metallic silicon powder introduction channel 2 to a fluidized-bed reaction device 1, and hydrogen chloride is supplied from a hydrogen chloride supply pipe 3 to the fluidized-bed reaction device 1, and the chlorination reaction is carried out in the fluidized-bed reaction device 1. A reaction gas (temperature: not lower than 320°C) generated in the fluidized-bed reaction device 1 is discharged from an upper part of the device into a transfer pipe 4 and sent to a distillation column 5.

Along the transfer pipe 4, a filter 6 is provided to remove fine powder of metallic silicon contained in the reaction gas. A part of the transfer pipe 4 upstream of the filter 6 is a double pipe, and fine powder of metallic silicon is removed from the reaction gas by the filter 6.

The transfer pipe 4 is provided with a cooling heat exchanger 7 downstream of the filter 6, and the reaction gas is cooled by the cooling heat exchanger 7 to 10°C to 40°C, more preferably 20°C to 30°C, and sent to the distillation column 5 in a liquefied state. As the heat exchanger 7, a shell-and-tube heat exchanger is generally preferably adopted to increase the heat transfer area, but a plate type, fin-tube type, etc., can also be adopted. As described above, in the heat exchanger 7, a unique scale mainly composed of zirconium is deposited on a wall surface of an upstream part of the heat exchanger 7, and particularly when the heat exchanger 7 is of the shell-and-tube type, the scale is deposited on a mounting perforated plate located on a reaction gas inlet side and on wall surfaces of ends of cooling tubes that open to the mounting perforated plate. However, according to an embodiment of the present invention, the amount of the scale deposited is significantly reduced.

In a case where a shell-and-tube heat exchanger is adopted as the heat exchanger 7, it is a preferable embodiment to shower a liquid containing chlorosilanes such as trichlorosilane and tetrachlorosilane onto the mounting perforated plate. This allows a liquid film of the chlorosilanes to be formed on the wall surface of the mounting perforated plate, so that a higher degree of inhibition of scale deposition is achieved.

The reaction liquid that has passed through the heat exchanger 7 is distilled in the distillation column 5, from which a purified gas containing trichlorosilane is recovered via a purified gas recovery pipe 8 at the top. Also, from the bottom of the column, a high-boiling fraction containing aluminum chloride, titanium tetrachloride, etc., is discharged into a high-boiling fraction discharge pipe 9.

### Examples

Hereinafter, the present invention will be described more specifically with reference to Examples, but the present invention is not limited to these Examples in any way. In the Examples and Comparative Examples, the measurement of the content of each metal impurity in metallic silicon, the measurement of the silicon content in the metallic silicon, the measurement of the average particle size of the metallic silicon, and analysis of the composition of scale were carried out by the following methods, respectively.

### 1) [Content of each metal impurity in metallic silicon]

0.5 g of metallic silicon was accurately weighed as a sample into a 50-ml Teflon (registered trademark) beaker. To this, 30 ml of 7N-HNO₃ was added, and then HF (50% by mass) was gradually added to decompose the sample. After decomposition, the sample solution was placed on a hot plate and heated at 140°C for 2 hours, then at a hot plate temperature of 160°C for 1 hour, and further at an adjusted hot plate temperature of 140°C until a small amount of liquid remained. After heating, 2 ml of HCl (35% by mass) was added as a recovery reagent to the remaining liquid, and further, 5 ml of pure water was added. The resultant mixture was heated at a hot plate temperature of 140°C for 5 minutes. The beaker was removed from the hot plate and cooled to room temperature.

The sample solution in the beaker was filtered into a 100-ml polyethylene volumetric flask using a polyethylene funnel and filter paper, and then pure water was added to make up the total volume to 100 ml. This solution was introduced into an inductively coupled plasma optical emission spectrometer (ICP-OES apparatus), Optima 8300 (product name; manufactured by PerkinElmer, Inc.), which is a dual-view sequential type, for analysis.

### 2) [Silicon content in metallic silicon]

3 g to 10 g of metallic silicon was collected into a mortar. The collected silicon was ground with a pestle. The obtained powdered sample was placed on a sample stage dedicated for X-ray fluorescence, and the silicon content was measured with an X-ray fluorescence analyzer (manufactured by Rigaku Corporation, product name: "ZSX Primus II").

### 3) [Average particle size of metallic silicon]

### <Sampling method>

Metallic silicon was taken in an amount of approximately 1 kg from a 1-ton flexible container into a glass container, stirred well, and then taken in an amount necessary for the following analysis.

### <Analysis method>

Approximately 100 g of metallic silicon powder was classified using a vibrating sieve machine having a plurality of sieves, and a cumulative diameter, which is the particle diameter corresponding to a cumulative mass of 50% when the fractions were added starting from the smallest fraction, was taken as the average particle size (median diameter). The vibrating sieve machine used was equipped with sieves conforming to JIS Z 8801-1 for testing, with nominal mesh sizes of 500 µm, 355 µm, 250 µm, 212 µm, 150 µm, 106 µm, and 45 µm, stacked together.

### 4) [Method of analyzing composition of scale deposited on inner wall of upstream part of heat exchanger]

### <Sampling method>

The heat exchanger 7 provided along the transfer pipe 4 was disassembled, and approximately 5 g of scale adhering to an upper surface of the mounting perforated plate on the reaction gas inlet side in the shell-and-tube heat exchanger was collected into a glass bottle and subjected to the following analysis.

### <Analysis method>

2.0 g to 5.0 g of the above scale sample was accurately weighed into a 50-ml Teflon (registered trademark) beaker, and 30 ml of pure water was added. Filter paper was set in a polyethylene funnel, and the sample solution in the beaker was filtered. With use of a 100-ml polyethylene volumetric flask, pure water was added to the filtrate to make up the total volume to 100 ml. The resultant solution was used as a sample solution. The obtained sample solution was diluted with pure water according to the concentration of each target element to be measured, and these solutions were introduced into an ICP-OES apparatus (Optima 8300 (product name; manufactured by PerkinElmer, Inc.)) for analysis.

### Examples 1 to 3 and Comparative Examples 1 and 2

The production of trichlorosilane was carried out according to the production process shown in Fig. 1. As the metallic silicon powder used, those with the silicon content and metal impurity contents (zirconium content, titanium content, and aluminum content) shown in Table 1 below, and each with an average particle size of 250 µm, were used.

### [Table 1]

**Table 1**

| | Zr content [ppmw] | Ti content [ppmw] | Al content [ppmw] | Ti%/Zr% mass ratio |
|---|---|---|---|---|
| Example 1 | 20 | 280 | 1500 | 14.0 |
| Example 2 | 20 | 380 | 1600 | 19.0 |
| Example 3 | 30 | 280 | 1500 | 9.3 |
| Comparative Example 1 | 40 | 280 | 1500 | 7.0 |
| Comparative Example 2 | 20 | 150 | 1500 | 7.5 |

In the production process of Fig. 1, the heat exchanger 7 was of a shell-and-tube type, equipped with 110 cooling tubes (inner diameter: 25 mm). The shell-and-tube heat exchanger 7 was of a type in which a liquid containing chlorosilanes was showered onto the mounting perforated plate located on the reaction gas inlet side.

The metallic silicon powder and hydrogen chloride were supplied to the fluidized-bed reaction device 1, and a chlorination reaction was carried out at a reaction temperature of 350°C. A reaction gas containing 85% by volume of trichlorosilane and 15% by volume of tetrachlorosilane was discharged into the transfer pipe 4 at a production rate of 500 m³/hour. The reaction gas flowed through the transfer pipe 4 into the heat exchanger 7, was condensed into a reaction liquid having a temperature of 20°C, and was transferred to the distillation column 5.

After continuing the above chlorination reaction for 8000 hours, the reaction was stopped, the heat exchanger 7 was disassembled, and the openings of the ends of the cooling tubes on the reaction gas inlet side were observed. Cooling tubes whose openings were completely blocked by scale deposition were evaluated as blocked, and the number of such cooling tubes was counted. The blockage rate was calculated by the following formula and shown in Table 2.$Blockage rate \left(%\right) = Number of blocked tubes / Total number of tubes \times 100$

Note that, for Comparative Example 1, the differential pressure of the heat exchanger 7 increased to the point that operation became impossible at around 3000 hours, and therefore the blockage rate at that time was shown in the table.

### [Table 2]

**Table 2**

| | Tube blockage rate [%] |
|---|---|
| Example 1 | 11 |
| Example 2 | 8 |
| Example 3 | 18 |
| Comparative Example 1 | 97 |
| Comparative Example 2 | 42 |

In each of the Examples and Comparative Examples, a composition analysis of the deposited scale was carried out, and the zirconium content [wt%] was 30% by mass to 40% by mass.

Preferred aspects of the invention are described below.
<1> A method for producing chlorosilanes by a chlorination reaction of metallic silicon, wherein
   the metallic silicon used in the chlorination reaction has: a zirconium content (Zr%) of not more than 35 ppm by mass on an elemental basis; and a mass ratio (Ti%/Zr%) of a titanium content (Ti%) to the zirconium content (Zr%) of not less than 8.0.
<2> The method for producing chlorosilanes described in <1>, wherein the metallic silicon used has a mass ratio (Ti%/Zr%) of the titanium content (Ti%) to the zirconium content (Zr%) of not more than 30.0.
<3> The method for producing chlorosilanes described in <1> or <2>, wherein the metallic silicon used has a zirconium content (Zr%) of not less than 1 ppm by mass on an elemental basis.
<4> The method for producing chlorosilanes described in any one of <1> to <3>, wherein the titanium content (Ti%) in the metallic silicon is not less than 10 ppm by mass and not more than 600 ppm by mass on an elemental basis.
<5> The method for producing chlorosilanes described in any one of <1> to <4>, wherein the chlorination reaction of the metallic silicon involves reacting the metallic silicon with hydrogen chloride to produce trichlorosilane.
<6> The method for producing chlorosilanes described in any one of <1> to <5>, wherein the metallic silicon has an average particle size of 150 µm to 400 µm.
<7> The method for producing chlorosilanes described in any one of <1> to <6>,
   wherein a reaction gas obtained by the chlorination reaction of the metallic silicon is transferred to a distillation column and purified, and
   wherein a heat exchanger for cooling and liquefying the reaction gas is provided along a transfer path to the distillation column.
<8> The method for producing chlorosilanes described in <7>, wherein the heat exchanger liquefies the reaction gas by cooling the reaction gas to a temperature of 10°C to 40°C.
<9> The method for producing chlorosilanes described in <7> or <8>, wherein the heat exchanger is a shell-and-tube heat exchanger.
<10> A method for producing chlorosilanes by a chlorination reaction of metallic silicon, wherein
   the metallic silicon used in the chlorination reaction has: a zirconium content (Zr%) of not less than 1 ppm by mass and not more than 35 ppm by mass on an elemental basis; and a mass ratio (Ti%/Zr%) of a titanium content (Ti%) to the zirconium content (Zr%) of not less than 8.0 and not more than 30.0.

### Reference Signs List

- 1: Fluidized-bed reaction device
- 2: Metallic silicon powder introduction channel
- 3: Hydrogen chloride supply pipe
- 4: Transfer pipe
- 5: Distillation column
- 6: Filter
- 7: Heat exchanger
- 8: Purified gas recovery pipe
- 9: High-boiling fraction discharge pipe

## Claims

1. A method for producing chlorosilanes by a chlorination reaction of metallic silicon, wherein
the metallic silicon used in the chlorination reaction has: a zirconium content (Zr%) of not more than 35 ppm by mass on an elemental basis; and a mass ratio (Ti%/Zr%) of a titanium content (Ti%) to the zirconium content (Zr%) of not less than 8.0.

2. The method for producing chlorosilanes as set forth in claim 1, wherein the metallic silicon used has a mass ratio (Ti%/Zr%) of the titanium content (Ti%) to the zirconium content (Zr%) of not more than 30.0.

3. The method for producing chlorosilanes as set forth in claim 1 or 2, wherein the metallic silicon used has a zirconium content (Zr%) of not less than 1 ppm by mass on an elemental basis.

4. The method for producing chlorosilanes as set forth in claim 1 or 2, wherein the titanium content (Ti%) in the metallic silicon is not less than 10 ppm by mass and not more than 600 ppm by mass on an elemental basis.

5. The method for producing chlorosilanes as set forth in claim 1 or 2, wherein the chlorination reaction of the metallic silicon involves reacting the metallic silicon with hydrogen chloride to produce trichlorosilane.

6. The method for producing chlorosilanes as set forth in claim 1 or 2, wherein the metallic silicon has an average particle size of 150 µm to 400 µm.

7. The method for producing chlorosilanes as set forth in claim 1 or 2,
- wherein a reaction gas obtained by the chlorination reaction of the metallic silicon is transferred to a distillation column and purified, and
- wherein a heat exchanger for cooling and liquefying the reaction gas is provided along a transfer path to the distillation column.

8. The method for producing chlorosilanes as set forth in claim 7, wherein the heat exchanger liquefies the reaction gas by cooling the reaction gas to a temperature of 10°C to 40°C.

9. The method for producing chlorosilanes as set forth in claim 7, wherein the heat exchanger is a shell-and-tube heat exchanger.
